# EUROPÄISCHE PATENTSCHRIFT

(11) **EP 1 384 012 B1**
(45) Veröffentlichungstag und Bekanntmachung des Hinweises auf die Patenterteilung: **15.09.2004**
(21) Anmeldenummer: 02732659.4
(22) Anmeldetag: 24.04.2002
(51) Int. Cl.: F16D 67/02

(54) **MODULAR AUFGEBAUTES MULTIFUNKTIONSSYSTEM, INSBESONDERE KOMBINIERTES ANFAHR-, BREMS- UND LEISTUNGSÜBERTRAGUNGSSYSTEM**
MODULAR CONSTRUCTED MULTIFUNCTIONAL SYSTEM, PARTICULARLY A COMBINED DRIVE, BRAKE AND POWER TRANSFER SYSTEM
SYSTEME MULTIFONCTIONS DE STRUCTURE MODULAIRE, NOTAMMENT SYSTEME COMBINE DE DEMARRAGE, DE FREINAGE ET DE TRANSMISSION DE FORCE MOTRICE

(30) Priorität: 30.04.2001 DE 10121148
(43) Veröffentlichungstag der Anmeldung: 28.01.2004
(73) Patentinhaber: Voith Turbo GmbH & Co. KG, 89522 Heidenheim (DE)
(72) Erfinder: KLEMENT, Werner, 89520 Heidenheim (DE); VOGELSANG, Klaus, 74564 Crailsheim (DE); KERNCHEN, Reinhard, 74589 Satteldorf (DE); DIELE, Karl-Heinz, 74589 Satteldorf-Ellrichshausen (DE); BECKE, Martin, 89075 Ulm (DE)
(74) Vertreter: Dr. Weitzel & Partner
(86) Internationale Anmeldenummer: PCT/EP2002/004493
(87) Internationale Veröffentlichungsnummer: WO 2002/088564

(56) Entgegenhaltungen:
- DE-A- 19 650 339
- DE-C- 19 815 445
- GB-A- 1 587 530
- US-A- 3 285 100

## Beschreibung

Die Erfindung betrifft ein modular aufgebautes Multifunktionssystem für den Einsatz in Getrieben, insbesondere automatischen und automatisierten Schaltgetrieben, insbesondere kombiniertes Anfahr-, Brems- und Leistungsübertragungssystem im einzelnen mit den Merkmalen aus dem Oberbegriff des Anspruches 1, siehe dazu das Dokument US-A-3 285 100; ferner eine Getriebebaueinheit.

Getriebe für den Einsatz in Fahrzeugen, insbesondere Nutzkraftwagen in Form von Schaltgetrieben oder automatisierten Schaltgetrieben sind in einer Vielzahl von unterschiedlichen Ausführungen bekannt. Diesen gemeinsam ist in der Regel, daß der Anfahrvorgang über eine Kupplungseinrichtung in Form einer Reibkupplung oder eines hydrodynamischen Wandlers realisiert wird. Problematisch gestaltet sich die Verwendung einer Reibungskupplung als Anfahrelement jedoch in den Funktionszuständen, welche durch einen erhöhten Schlupf über einen längeren Zeitraum gekennzeichnet sind. Dies gilt insbesondere für den Anfahrvorgang. Aufgrund der enormen thermischen Beanspruchung ist die Kupplungseinrichtung dann einem erhöhten Verschleiß unterworfen. Um diesen möglichst gering zu halten, sind entsprechende Anforderungen an den zu verwendenden Reibbelag zu stellen. Des weiteren bedingen die Verschleißerscheinungen geringe Standzeiten für das Anfahrelement. Der Nachteil von Lösungen mit Anfahrelementen in Form von hydrodynamischen Wandlern besteht im wesentlichen in den hohen Kosten für den hydrodynamischen Teil und dem Erfordernis des Vorsehens einer Trennkupplung.

Eine Ausführung einer Getriebebaueinheit mit einem Anfahrelement in Form einer hydrodynamischen Kupplung ist aus der Druckschrift DE 196 50 339 A1 bekannt. Mit dieser werden mindestens zwei Betriebszustände - ein erster Betriebszustand zur Leistungsübertragung in wenigstens einer Schaltstufe und ein zweiter Betriebszustand zur Abbremsung - realisiert. Dabei werden beide Funktionen über die Elemente der hydrodynamischen Kupplung realisiert, welche somit als gattungsgemäße Multifunktionseinheit fungiert. Diese umfaßt ein Pimärrad und ein Sekundärrad, welche miteinander einen torusförmigen Arbeitsraum bilden. Die Realisierung der Funktion eines hydrodynamischen Retarders erfolgt durch Zuordnung der Funktion des Statorschaufelrades, entweder durch Festsetzung gegenüber einem ruhenden Getriebeteil zum Primärrad und der Funktion des Rotorschaufelrades zum Sekundärrad oder der Zuordnung der Funktion des Statorschaufelrades zum Sekundärrad durch Festsetzen des Sekundärrades gegenüber den ruhenden Getriebeteilen und der Funktion des Rotorschaufelrades zum Primärrad. Das die Funktion des Rotorschaufelrades übernehmende Schaufelrad ist in beiden Fällen mit der Getriebeausgangswelle über den mechanischen Getriebeteil gekoppelt. Die Anbindung der hydrodynamischen Kupplung an die Antriebswelle bzw. den mechanischen Getriebeteil der Getriebebaueinheit erfolgt dabei derart, daß zur Realisierung des ersten Betriebszustandes das Sekundärrad mit dem mechanischen Getriebeteil und das Primärrad mit der Getriebeeingangswelle verbindbar ist, während zur Realisierung der zweiten Betriebsweise, d. h. Abbremsung, eines der beiden Schaufelräder festgesetzt wird. Zu diesem Zweck sind der hydrodynamischen Kupplung, insbesondere einem Schaufelrad Mittel zur Festsetzung und Entkopplung vom Antriebsstrang zugeordnet. Diese Ausführung erlaubt die Gestaltung einer besonders kompakten Getriebebaueinheit, da auf ein separates Bremselement verzichtet werden kann. Ein Nachteil dieser Ausführung besteht jedoch darin, daß diese Ausführung nur für automatische Schaltgetriebe konzipiert ist, bei welchen während des Schaltvorganges Motor oder Turbine eine starke Drehzahländerung erfahren, wobei die Drehzahl des Sekundärrades synchronisiert werden muß. Bei Anwendung in automatisierten Schaltgetrieben ist es jedoch zur Gewährleistung einer sicheren Unterbrechung des Leistungsflusses bei Schaltvorgängen erforderlich, eine separate Trennkupplung vorzusehen. Des weiteren ist die hydrodynamische Kupplung fest im Gesamtkonzept der Getriebebaueinheit integriert und somit nicht frei austauschbar, da diese eine Anpassung der Umgebung erfordert.

Der Erfindung liegt daher die Aufgabe zugrunde, ein Multifunktionssystem, insbesondere kombiniertes Anfahr- und Bremssystem der eingangs genannten Art, derart weiterzuentwickeln, daß dieses unabhängig von der Art der Getriebebaueinheit - automatisiertes Schaltgetriebe oder Automatgetriebe - einsetzbar ist. Im einzelnen ist dabei auf die Realisierung eines möglichst verschleißfreien Anfahrvorganges unabhängig von der Zeitdauer des Zustandes erhöhten Schlupfes zu achten. Das Multifunktionssystem selbst sollte dabei durch einen geringen konstruktiven und steuerungstechnischen Aufwand charakterisierbar und leicht in ein Antriebssystem bzw. in eine Kraftübertragungseinheit, beispielsweise in Form einer Getriebebaueinheit integrierbar sein, wobei den zunehmend erhöhten Anforderungen an eine geringe Baulänge Rechnung getragen werden sollte und eine Integrierbarkeit unabhängig von der restlichen Getriebeumgebung gegeben sein sollte. Ein weiterer Aspekt der Erfindung besteht darin, eine sichere Gewährleistung der Unterbrechung des Leistungsflusses während des Schaltvorganges zu ermöglichen.

Die erfindungsgemäße Lösung ist durch die Merkmale der Ansprüche 1 und 15 charakterisiert. Vorteilhafte Ausgestaltungen sind in den Unteransprüchen wiedergegeben.

Erfindungsgemäß umfaßt vorteilhaft ein modular aufgebautes Multifunktionssystem, insbesondere kombiniertes Anfahr- ,Brems- und Leistungsübertragungssystem, einen Eingang und einen Ausgang, ein dazwischen angeordnetes Anfahrelement in Form eines hydrodynamischen Bauelementes mit mindestens einem Primärschaufelrad und einem Sekundärschaufelrad, d. h. in Form einer hydrodynamischen Kupplung, eine einem Schaufelrad zugeodnete Bremseinrichtung sowie eine schaltbare Kupplung zur Überbrückung des hydrodynamischen Elementes, d. h. Umgehung des hydrodynamischen Leistungszweiges in Form einer trockenlaufenden Reibungskupplung. Das Anfahrelement, d. h. das hydrodynamische Bauelement weist eine An- und eine Abtriebsseite auf. Die Abtriebsseite des Anfahrelementes, d. h. der hydrodynamischen Kupplung, ist mit dem Ausgang der Multifunktions- bzw. Anfahreinheit verbunden. Erfindungsgemäß ist dabei desweiteren zwischen dem Sekundärschaufelrad, d. h. dem Abtrieb des Anfahrelementes und dem Ausgang der Multifunktionseinheit ein Freilauf vorgesehen. Der Freilauf ermöglicht als richtungsgeschaltete Kupplung im wesentlichen die zwei folgenden Funktionszustände:
1. Ist die Drehzahl auf der Antriebsseite des Anfahrelementes, d. h. dem Sekundärrad gleich der am Ausgang des modular aufgebauten Multifunktionssystems wird ein Moment vom Sekundärrad auf den Ausgang des modular aufgebauten Multifunktionssystems übertragen.
2. Ist die Drehzahl des Sekundärrades, d. h. des Abtriebes des Anfahrelementes geringer als am Ausgang der Anfahreinheit wird über das Sekundärrad kein Moment auf den Ausgang übertragen, das Sekundärrad läuft frei.

Die Komponenten Anfahrelement, Bremseinrichtung und Freilauf sind erfindungsgemäß zu einer Baueiheit zusammengefaßt, welche mit der schaltbaren Kupplung kombiniert das Multifunktionssystem bilden. Diese Baueinheit bildet einen ersten Modul. Der zweite Modul wird von der schaltbaren Kupplung gebildet.

Die erfindungsgemäße vorteilhafte Lösung bietet funktional neben der Realisierung eines nahezu verschleißfreien Anfahrvorganges den Vorteil, daß während des Schaltvorganges das hydrodynamische Bauelement nicht entleert werden muß und auch keine zusätzliche Trennkupplung zur Leistungsunterbrechung erforderlich ist. Die Abkoppelung des Einganges, welcher in der Regel die Getriebeeingangswelle bildet, von den nachgeordneten Schaltsfufen erfolgt allein über den Freilauf und sichert somit die Funktion der Synchroneinrichtung im Schaltgetriebe. Konstruktiv kann die Baueinheit aus Anfahrelement, Bremseinrichtung, Freilauf als vormontierte modulare Baueinheit gefertigt, gehandelt und in eine Getriebebaueinheit zwischen schaltbarer Kupplung und Schaltstufen integriert werden. Dazu weist der erste Modul aus Anfahrelement, Bremseinrichtung, Freilauf und Ausgang zwei Schnittstellen zur Koppelung mit der schaltbaren Kupplung auf. Die schaltbare Kupplung als zweites Modul kann dabei unter Berücksichtigung der Anschlußabmessungen direkt oder über Adapterzwischenelemente mit einer Vielzahl unterschiedlich ausgeführter erster Module zu einem Multifunktionssystem zusammengefaßt werden. Die Möglichkeit der beliebigen Zusammenfaßbarkeit wird durch die mögliche ölseitige Trennung der beiden parallel schaltbaren Übertragungselemente unterstützt, da die Überbrückungskupplung als trockenlaufende Kupplung ausgeführt ist.

Die schaltbare Kupplung und die hydrodynamische Kupplung sind parallel zueinander geschaltet, jedoch nur während zeitlich geringer oder definierter Phasen gemeinsam im Eingriff, wobei der Leistungsfluß zwischen dem Eingang und dem Ausgang der Anfahreinheit unterbrechbar ist. Diese Unterbrechbarkeit kann dabei beim Einsatz der Anfahreinheit in automatisierten Schaltgetrieben mit der Anfahreinheit nachgeordnetem mechanischem Getriebeteil durch die Schaltbarkeit der schaltbaren Kupplung bei gleichzeitiger Entleerung bzw. bereits geleerter hydrodynamischer Kupplung oder beim Einsatz in automatisierten Schaltgetrieben mit mechanischem Getriebeteil oder Nach- bzw. Gruppenschaltsatz beim Umschalten zwischen den ersten beiden unteren Gangstufen durch die Entleerung der hydrodynamischen Kupplung erfolgen. Vorzugsweise werden bei einer derartigen Ausführung die Abtriebsseiten der hydrodynamischen Kupplung und der schaltbaren Kupplung drehfest miteinander über den Freilauf gekoppelt. Die schaltbare Kupplung ist als trockene Reibkupplung ausgeführt. Der Vorteil dieser Anordnung besteht im wesentlichen darin, daß nur zwei Zustände bezüglich der Leistungsübertragung vom Eingang des Multifunktionselementes bis zum Ausgang unterschieden werden müssen, wobei die Leistungsübertragung entweder rein mechanisch über die schaltbare Kupplung oder hydrodynamisch über das hydrodynamische Bauelement erfolgt. Durch die geeignete Ansteuerung können dabei die Vorteile der hydrodynamischen Leistungsübertragung für bestimmte Fahrzustände optimal genutzt werden. Dies gilt insbesondere für den Anfahrvorgang, welcher vollständig verschleißfrei erfolgen kann, wobei in allen anderen Fahrzuständen eine vollständige Überbrückung der schlupfbehafteten hydrodynamischen Kupplung realisiert wird. Ab einem bestimmten Schlupfzustand, welcher abhängig von der Auslegung der hydrodynamischen Kupplung ist, erfolgt die Überbrückung durch eine Kopplung zwischen dem Pumpen- und dem Sekundärrad mittels mechanischer schaltbarer Kupplung. Die Antriebsleistung wird von ein^er mit dem modular aufgebauten Multifunktionssystem, insbesondere dem Eingang koppelbaren Antriebsmaschine mit nur geringen Verlusten, bedingt durch die mechanischen Übertragungssysteme und die notwendige Hilfsenergie, auf den Ausgang übertragen. Da für den Einsatz in Schaltgetrieben, insbesondere synchronisierten Schaltgetrieben beim Wechsel zwischen zwei Gangstufen die Verbindung zwischen der Antriebsmaschine und dem Abtrieb in der Regel getrennt werden sollte, wird diese Aufgabe der schaltbaren Kupplung zugeordnet.

Durch die Ausführung der schaltbaren Kupplung als trockenlaufede Kupplung können die höhren Reibbeiwerte dieser Kupplungen genutzt werden. Dies gilt auch bei Ausführung der Bremseinrichtung als trockenlaufende Reibbremse.

Jedem Modul - schaltbarer Kupplung und bauliche Einheit der Komponenten Bremseinrichtung, Freilauf und hydrodynamische Kupplung - ist ein eigener Gehäuseteil, welcher mit den anderen Gehäuseteilen das Gesamtgehäuse bildet, zuzuordnen. Dabei erfolgt die Zusammenfassung der Komponenten hydrodynamische Kupplung, Bremseinrichtung und Freilauf in einem gemeinsamen Gehäuse oder Gehäuseteil. Das gemeinsam nutzbare Gehäuse kann dabei
1. vom Gehäuse des hydrodynamischen Bauelementes, insbesondere der hydrodynamischen Kupplung oder
2. einem separaten Gehäuse gebildet werden.

Denkbar ist im letzten Fall beispielsweise auch die Ausbildung des Gehäuses entweder allein von der mit der Anfahreinheit koppelbaren Getriebebaueinheit oder von beiden an die Anfahreinheit anschließenden Elementen.

Die vorgesehene Einrichtung zum wahlweisen Festhalten des Sekundärrades in Form der Bremseinrichtung ermöglicht es, das hydrodynamische Bauelement auch als vollwertigen hydrodynamischen Retarder zu betreiben und damit eine verschleißfreie Bremseinrichtung zu ermöglichen. Eine separate hydrodynamische Bremseinrichtung, welche insbesondere beim Einsatz in Nutzkraftwagen Verwendung findet, kann entfallen. Die Ventilationsverluste des Retarders sind im Vergleich zum konventionellen Retarder sehr gering. Die Einrichtung zum Festhalten bzw. zur Ankupplung des Sekundärrades am Gehäuse ist im einfachsten Fall als Bremseinrichtung, vorzugsweise in Scheibenbauweise ausgeführt. Diese wird am Abtrieb der hydrodynamischen Kupplung, d. h. am Sekundärrad wirksam. Die Anbindung des Bremselementes am Sekundärrad erfolgt zwischen Sekundärrad und Freilauf. Bei eingelegtem Gang und geschlossenem Bremselement kann in besonders vorteilhafter Weise ein der gewünschten Fahrtrichtung entgegengesetzte Bewegung des Fahrzeuges vermieden werden, d. h. insbesondere Zurückrollen des Fahrzeuges an Steigungen. Die Bremseinrichtung ermöglicht desweiteren eine schnelle Reduzierung der Motordrehzahl bei Hochschaltvorgängen und verkürzt damit die Zeitdauer der Zugkraftunterbrechung bei automatisierten Schaltgetrieben.

Die erfindungsgemäß vorteilhafte gestaltete Anfahreinheit baut sehr klein, insbesondere in axialer Richtung, und hat somit bei Integration in einer Getriebebaueinheit, insbesondere einem automatisierten Schaltgetriebe nur geringen Einfluß auf die Baulänge. Die bauliche Einheit aus hydrodynamischer Kupplung, Freilauf und Bremseinrichtung kann als modulare Baueinheit vormontiert im Handel angeboten und geliefert werden. Die Integration in einer Anschlußeinheit erfolgt dann kraftschlüssig und/oder formschlüssig, beispielsweise durch Aufstecken der modularen Baueinheit auf eine Eingangswelle des Anschlußelementes, insbesondere von Nachschaltstufen einer Getriebebaueinheit oder die Realisierung einer Welle-Nabe-Verbin-dung zwischen dem Ausgang der Anfahreinheit und dem Eingang der Anschlußeinheit, wobei die Eingangswelle der Anschlußeinheit gleichzeitig die Ausgangswelle der Anfahreinheit im montierten Zustand bilden kann. In gleicher Weise erfolgt die Kombination mit einer schaltbaren Kupplung. Es besteht auch die Möglichkeit beide Module gemeinsam als Multifunktionseinheit vorzumontieren und zu handeln.

Die drehfeste Verbindung zwischen den Abtriebsseiten des hydrodynamischen Bauelementes, insbesondere der hydrodynamischen Kupplung hinter dem Freilauf und der schaltbaren Kupplung über die beiden Schnittstellen wird dabei lösbar bezüglich der Montage erfolgen. Die Verbindung selbst kann form- und/oder kraftschlüssig erfolgen. Die konkrete Auswahl der Verbindungsart erfolgt entsprechend den Erfordernissen des Einsatzfalles.

Bezüglich der räumlichen Anordnung der einzelnen Komponenten der hydrodynamischen Kupplung in axialer Richtung vom Eingang des modular aufgebauten Multifunktionssystems zum Ausgang des modular aufgebauten Multifunktionssystems betrachtet bestehen im wesentlichen die zwei nachfolgend genannten Möglichkeiten:
1. Anordnung des Primärrades der hydrodynamischen Kupplung zwischen der schaltbaren Kupplung und dem Sekundärrad der hydrodynamischen Kupplung
2. Anordnung des Sekundärrades der hydrodynamischen Kupplung zwischen der schaltbaren Kupplung und dem Primärrad der hydrodynamischen Kupplung

Unter einem weiteren vorteilhaften Aspekt der Erfindung besteht die Möglichkeit, als zusätzliche Komponente in der Anfahreinheit eine Einrichtung zur Schwingungsdämpfung, insbesondere einen Torsionsschwingungsdämpfer in diese zu integrieren. Der Torsionsschwingungsdämpfer ist funktional entweder der Antriebsseite, d. h. dem Eingang, wobei diese Ausführung besonders vorteilhaft ist, oder der Abtriebsseite, d. h. dem Ausgang zuordenbar, wobei bezüglich der räumlichen Anordnung zwischen der Anordnung des Torsionsschwingungsdämpfers in Einbaulage betrachtet
a) räumlich vor der hydrodynamischen Kupplung und vor der schaltbaren Kupplung oder
b) räumlich vor der hydrodynamischen Kupplung und hinter der schaltbaren Kupplung oder
c) räumlich hinter der hydrodynamischen Kupplung
unterschieden werden kann.

Gemäß einer Weiterentwicklung des erfindungsgemäß vorteilhaften gestalteten Multifunktionssystems ist dem ersten Modul, welches von der baulichen Einheit aus hydrodynamischer Kupplung, Bremseinrichtung und Freilauf gebildet wird, ein eigenständiges Betriebs- und/oder Steuer- und/oder Schmiermittelversorgungssystem zugeordnet, womit eine vollständig autarke Einheit hinsichtlich der Kombinierbarkeit mit hinsichtlich der Auslegung oder Ausführung anders gestalteten schaltbaren Kupplungen und nachgeordneten Getriebeteilen gegeben ist.

Die Betätigung beider Elemente - Bremseinrichtung und schaltbare Kupplung - der modular aufgebauten Multifunktionseinheit erfolgt mit Hilfsenergie, beispielsweise pneumatisch oder hydraulisch oder elektrisch oder einer Kombination dieser. Dabei können zur Betätigung der Elemente Bremseinrichtung und schaltbare Kupplung unterschiedliche Hilfsenergien genutz werden oder aber die gleichen. Gemäß einer besonders vorteilhaften Ausgestaltung erfolgt die Betätigung zumindest der schaltbaren Kupplung, vorzugsweise jedoch beider Elemente vorzugsweise mit der gleichen Hilfsenergie, welche für Nachschaltstufen bereitgestellt wird, d. h. mittels welcher ein Gangstufenwechsel realisierbar ist. Dies bedeutet, daß auch das gleiche Hilfsenergiebereitstellungssystem genutzt werden kann. Auch bietet diese Lösung steuerungstechnisch große Vorteile, da die schaltbare Kupplung bezüglich der Betätigung der Anschlußeinheit, insbesondere den Schaltstufen des Getriebes zugeordnet werden kann.

Die Kombination einer hydrodynamischen Kupplung, Bremseinrichtung und eines Freilaufes sowie einer schaltbaren Kupplung sowie eventuell zusätzlich eines Torsionsschwingungsdämpfers und die Integration in einer modularen Baueinheit bildet die Möglichkeit der Schaffung einer multifunktionalen Antriebskomponente mit geringem Bauraumbedarf, insbesondere für den Einsatz in Fahrzeugen.

Die erfindungsgemäße Lösung wird nachfolgend anhand von Figuren erläutert. Darin ist im einzelnen folgendes dargestellt:
- Figur 1: zeigt in schematischer Darstellung den Grundaufbau eines efindungsgemäß gestelteten Multifunktionssystems;
- Figur 2: zeigt eine Ausführung gemäß Figur 1 mit räumlich vertauschter Anordnung der Schaufelräder;
- Figur 3: verdeutlicht anhand einer Tabelle unterschiedliche Funktionszustände;
- Figur 4: verdeutlicht in schematisch stark vereinfachter Darstellung den Aufbau einer Getriebebaueinheit mit Multifunktionseinheit und eigenem Betriebs- und/oder Steuer- und/oder Schmiermittelversorgungssystem.

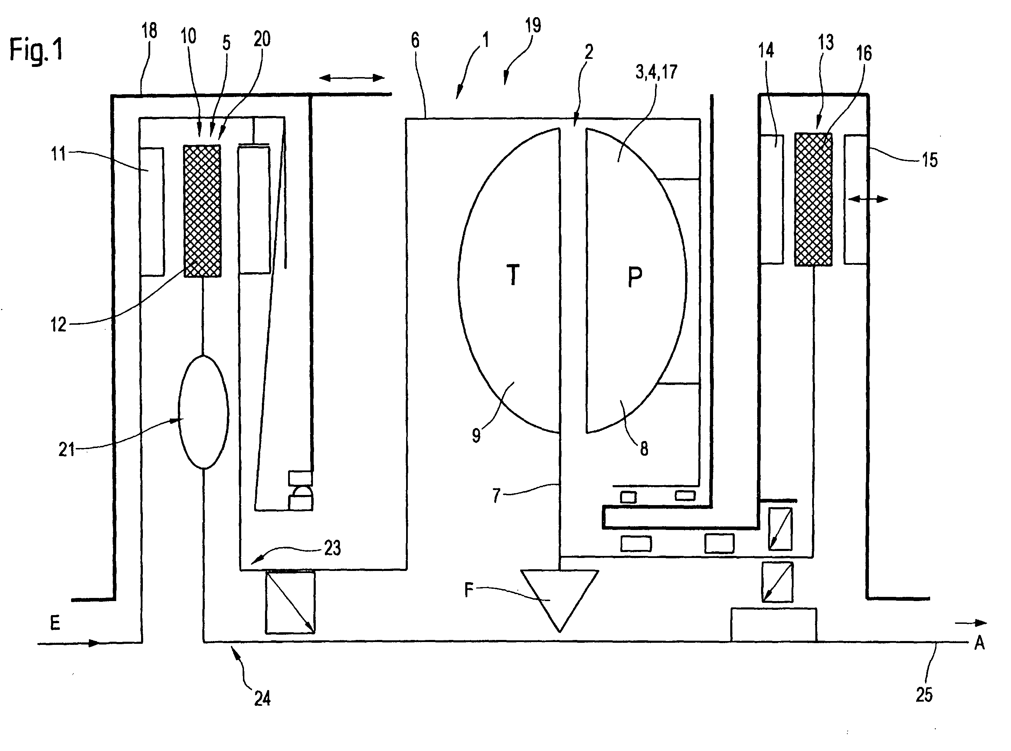

Die Figur 1 verdeutlicht in schematisch vereinfachter Darstellung den Grundaufbau eines erfindungsgemäß ausgeführten modular aufgebauten Multifunktionssystems 1, insbesondere kombinierten Anfahr- Brems- und Leistungsübertragungssystems. Dieses umfaßt ein Anfahrelement 2 in Form eines hydrodynamischen Bauelementes 3, vorzugsweise in Form einer hydrodynamischen Kupplung 4 und eine schaltbare Kupplung 5 zur Überbrückung des hydrodynamischen Leistungszweiges. Die hydrodynamische Kupplung 4 umfaßt eine, mit einem Eingang E des modular aufgebauten Multifunktionssystems 1 koppelbare Antriebsseite 6 und eine, mit einem Ausgang A des modular aufgebauten Multifunktionssystems 1 koppelbare Abtriebsseite 7 und mindestens ein, im Traktionsbetrieb bei gewünschter Leistungsübertragung zwischen Eingang und Ausgang über das hydrodynamische Bauelement 3 als Pumpenrad fungierendes Primärrad 8 und ein als Turbinenrad fungierendes Sekundärrad 9. Die Bezeichnungen Eingang und Ausgang beziehen sich dabei auf die Kraftflußrichtung im Traktionsbetrieb bei Integration des modular aufgebauten Multifunktionssystems 1 in einem Antriebssystem von einer Antriebsmaschine zum Abtrieb.

Die hydrodynamische Kupplung 4 und die schaltbare Kupplung 5 sind parallel schaltbar. Die schaltbare Kupplung 5 ist erfindungsgemäß als trockene Reibungskupplung 10 ausgeführt. Diese umfaßt einen Kupplungseingang 11 und einen Kupplungsausgang 12, welche beispielsweise als Kupplungsscheiben ausgeführt sind und miteinander wenigstens mittelbar reibschlüssig in Wirkverbindung bringbar sind, das heißt entweder direkt oder über weitere scheibenförmige Zwischenelemente die Reibpaarungen miteinander bilden.

Zwischen dem Sekundärrad 9 beziehungsweise der Abtriebsseite 7 der hydrodynamischen Kupplung 4 und dem Ausgang A ist ein Freilauf F angeordnet. Mit dem Freilauf F wird ein Multifunktionssystem 1 geschaffen, welches neben dem Anfahrvorgang auch bei Kuppelvorgängen beim Einsatz in Schaltgetrieben, insbesondere automatisierten Schaltgetrieben, positive Effekte erzielt. Dabei kann insbesondere während des Gangstufenwechsels übermäßiger Verschleiß in den Synchronisiereinrichtungen vermindert werden und somit der Komfort erhalten beziehungsweise sogar verbessert werden. Des weiteren ist zur Realisierung der Sicherung gegenüber ungewolltem Zurückrollen, beispielsweise beim Anfahren am Berg und zur Ausnutzung des Anfahrelementes 2 als hydrodynamische Bremseinrichtung eine Bremseinrichtung 13 vorgesehen. Die Bremseinrichtung 13 ist vorzugsweise als Scheibenbremseinrichtung in Lamellenbauart ausgeführt und mit der Abtriebsseite 7 des hydrodynamischen Bauelementes 3, insbesondere der hydrodynamischen Kupplung 4 vor dem Freilauf F gekoppelt. Die Bremseinrichtung 13 umfaßt dazu mindestens eine erste ortsfeste Scheibe 14, welche vorzugsweise an einem Gehäuse 15, welches hier nur schematisch angedeutet ist, angeordnet ist und ein zweites Scheibenelement 16, welches wenigstens mittelbar, das heißt entweder direkt ober über weitere zwischengeschaltete Scheibenelemente mit der ortsfesten Scheibe 14 in Wirkverbindung bringbar ist. Das zweite Scheibenelement 16 ist drehfest mit der Abtriebsseite 7, insbesondere dem Sekundärrad 9 gekoppelt. Durch das Vorsehen der Bremseinrichtung 13 sind mit dem hydrodynamischen Bauelement 3 wenigstens zwei Betriebsweisen realisierbar - eine erste Betriebsweise zur Leistungsübertragung zwischen Eingang E und Ausgang A, welche insbesondere während des Anfahrvorganges zum Tragen kommt und die Funktion einer hydrodynamischen Kupplung beschreibt und eine zweite Betriebsweise zur Abbremsung, d. h. Nutzung des hydrodynamischen Bauelementes 3 als Retarder 17 - realisiert. Zur Realisierung der Funktion des hydrodynamischen Bauelementes 3 als hydrodynamischer Retarder 17 erfolgt die Zuordnung der Funktion des Statorschaufelrades durch Festsetzung gegenüber den ruhenden Getriebeteilen, insbesondere dem Gehäuse 15 zum Sekundärschaufelrad 9, das heißt zu dem bei Funktion als hydrodynamische Kupplung 4 fungierenden Turbinenrad. Die Funktion eines Rotorschaufelrades des hydrodynamischen Retarders 17 wird dabei vom Primärschaufelrad 8, welches bei Funktionsweise als hydrodynamische Kupplung 4 auch als Pumpenrad fungiert, übernommen. Durch den Freilauf F besteht eine optimale Möglichkeit der Festsetzung des Sekundärschaufelrades 9 und Abstützung am Gehäuse 15.

Bremseinrichtung 13, Anfahrelement 2, Ausgang A sind erfindungsgemäß desweiteren mit dem Gehäuse 15 zu einer Baueinheit 19 zusammengefaßt. D. h. das Gehäuse 15, welches einteilig oder mehrteilig ausgeführt ist und die genannten Bauelemente bilden einen ersten Modul 19, welcher komplett vormontiert geliefert und montiert sowie mit beliebigen schaltbaren Kupplungen 5 kombiniert bzw. bei Integration in Getriebebaueinheiten zwischen schaltbarer Kupplung 5 und beliebig ausgeführter nachgeordneter Getriebeteile, Schaltstufen, stufenlose Getriebe e.t.c, angeordnet werden kann. Der zweite Modul 20 des Multifunktionssystems 1 wird von der schaltbaren Kupplung 5 gebildet. Deren Kupplungseingang 11 ist drehfest mit dem Eingang E verbunden - je nach Ausgestaltung entweder direkt oder über weitere Zwischenelemente. Dabei bildet die Antriebsseite 6 des Anfahrelementes 2 eine erste Schnittstelle 23 zur drehfesten Koppelung mit der Kupplungseingangsseite 10 der schaltbaren Kupplung 5. Eine zweite Schnittstelle 24 wird zwischen der Verbindung Freilauf F und Ausgang A und der schaltbaren Kupplung 5, insbesondere dem Kupplungsausgang 12 geschaffen. Der Ausgang A bildet eine weitere dritte Schnittstelle 25 zur drehfesten Verbindung mit Schaltstufen oder anderen nachordenbaren Übertragungselementen bzw. Getriebeteilen. Der Begriff Schnittstelle ist dabei funktional zu verstehen und nicht zwingend als konstruktives Merkmal, wobei zwischen den einzelnen Modulen 19 und 20 sowie den Nachschaltstufen lösbare Verbindungen angestrebt sind. Die räumliche Anordnung des Sekundärrades 9 erfolgt in axialer Richtung zwischen Eingang und Ausgang betrachtet zwischen schaltbarer Kupplung 5 und Primärrad 8.

Diese Ausführung ermöglicht die Schaffung eines modular aufgebauten Multifunktionssystems zur Realisierung unterschiedlicher Funktionen, das heißt insbesondere des Anfahrvorganges des verschleißfreien Kuppelvorganges und Bremsvorganges bei Integration in einer Getriebebaueinheit, einem Schaltgetriebe.

Bei dem in der Figur 1 dargestellten modularen Multifunktionssystem 1 wird dabei das Anfahrelement 2 in Form einer hydrodynamischen Baueinheit 3 und die Bremseinrichtung 13 in einem Gehäuse 15 integriert und bilden somit ein Modul 19. Das zweite Modul 20 wird von der schaltbaren Kupplung 5 gebildet. Beide Module weisen separate, zu einem Gesamtgehäuse zusammenfaßbare Gehäuseteile 15, 18 auf. Es besteht die Möglichkeit, daß das Gehäuse des ersten Modules 15 vom Gehäuse nachgeordneter Schaltstufen oder stufenloser Getriebe gebildet wird. Diese Lösung ermöglicht eine einfache Zwischenschaltung der hydrodynamischen Komponente als Zusatzkomponente zur Realisierung unterschiedlicher Funktionen zur schaltbaren Kupplung 5 und den dieser in der Regel beim Einsatz in Fahrzeugen nachgeordneten Schaltstufen.

Unter einem weiteren Aspekt der Erfindung kann zusätzlich ein Torsionsschwingungsdämpfer 21 vorgesehen werden. Dieser ist funktional entweder der Antriebsseite, das heißt dem Eingang E des modularen Multifunktionssystems 1 zugeordnet, wobei diese Ausführung besonders vorteilhaft ist. Eine andere Möglichkeit besteht darin, die Einrichtung zur Schwingungsdämpfung funktional der Abtriebsseite, das heißt dem Ausgang A des modularen Multifunktionssystem 1 zuzuordnen, wobei bezüglich der räumlichen Anordnung zwischen der Anordnung der Einrichtung zur Schwingungsdämpfung 21 in Einbaulage betrachtet
a) räumlich vor der hydrodynamischen Kupplung 4 und der schaltbaren Kupplung 5, oder
b) räumlich vor der hydrodynamischen Kupplung 4 und hinter der schaltbaren Kupplung 5, oder
c) räumlich hinter der hydrodynamischen Kupplung 4 unterschieden werden kann.

Gemäß einer besonders vorteilhaften Ausgestaltung handelt es sich bei der Bremseinrichtung 13 ebenfalls um eine trockenlaufende Reibbremseinrichtung. Dies ermöglicht die Ausnutzung höherer Reibbeiwerte trockenlaufender Übertragungseinrichtungen.

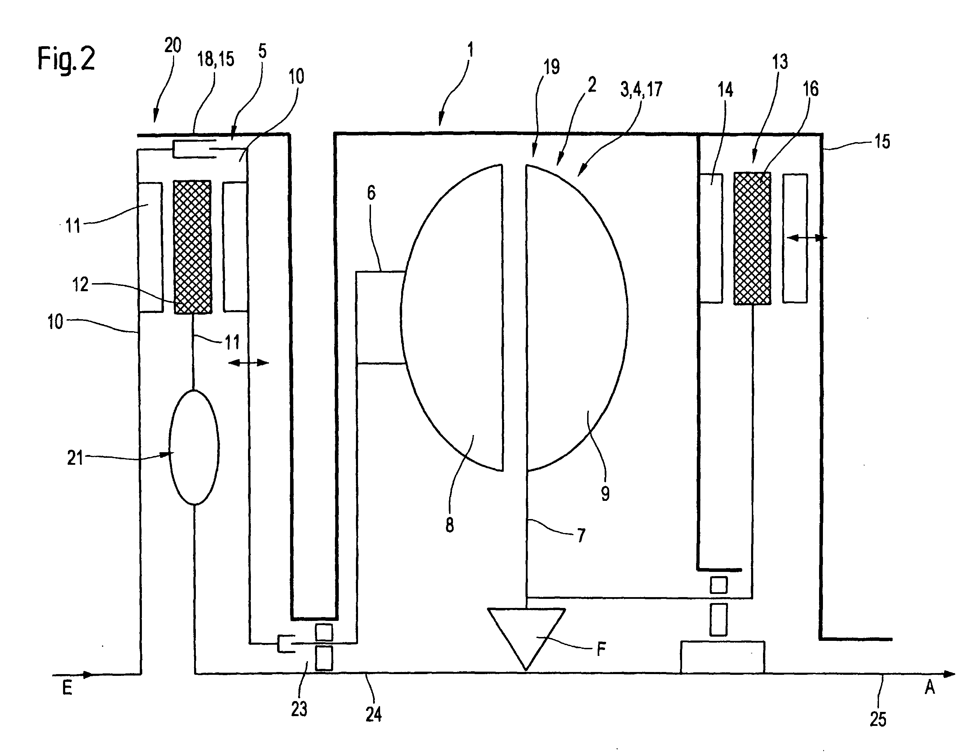

Figur 2 verdeutlicht eine alternative Ausführung bezogen auf die räumliche Anordnung der einzelnen Komponenten der hydrodynamischen Kupplung 4 in axialer Richtung vom Eingang E des modularen Multifunktionssystems zum Ausgang A betrachtet. Bei dieser erfolgt die räumliche Anordnung des Primärrades 8 der hydrodynamischen Kupplung 4 in axialer Richtung betrachtet zwischen der schaltbaren Kupplung 5 und dem Sekundärrad 9. Die Funktionsweise gestaltet sich dabei analog zu der in der Figur 1 beschriebenen.

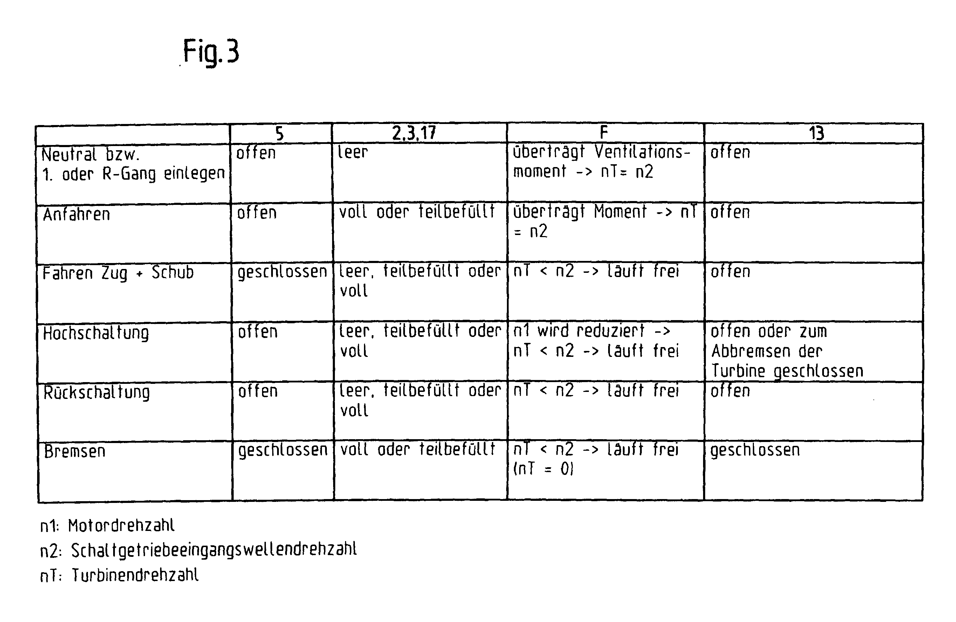

Die in der Figur 3 angegebene Zustandstabelle verdeutlicht für die Ausführungen gemäß Figur 1 und 2 beispielhaft einzelne Funktionszustände und Schaltvarianten der entsprechenden Elemente des modular aufgebauten Multifunktionssystems 1. In der Leerlaufstellung beziehungsweise zur Einlegung der ersten Gangstufe oder des Rückwärtsganges ist die schaltbare Kupplung 5 geöffnet, während das hydrodynamische Bauelement 3 entleert ist. Über das Primärrad 8 wird durch Ankopplung an den Eingang E des Multifunktionssystems 1 ein Ventilationsmoment erzeugt. Die am Sekundärrad 9 vorliegende Drehzahl n_{Sekundär}, welche der Sekundärraddrehzahl n_{T} des hydrodynamischen Bauelementes 3 entspricht, entspricht dabei auch der Eingangsdrehzahl am Eingang der mit dem modularen Multifunktionssystem 1 gekoppelten Schaltstufen. In diesem Fall wird durch den im Arbeitsraum eingeschlossenen Luftstrom ein sogenanntes Ventilationsmoment durch Umwälzung übertragen.

Der Anfahrvorgang ist durch Leistungsübertragung über das hydrodynamische Bauelement, insbesondere die Kupplung 4 durch die erste Betriebsweise des hydrodynamischen Bauelementes charakterisiert. In diesem Fall ist die schaltbare Kupplung 5 geöffnet und die hydrodynamische Kupplung 4 voll- oder teilbefüllt. Das im Arbeitsraum aufgrund der Primärschaufelradrotation umgewälzte Betriebsmittel überträgt dabei ein Moment auf das Sekundärschaufelrad 9. Die Drehzahl des Primärschaufelrades 8 entspricht unter Berücksichtigung des Schlupfes im wesentlichen dem des Sekundärschaufelrades, das heißt n_{T} = n₂ , die der Drehzahl am Eingang der nachgeordneten Schaltstufe entspricht, das heißt der Drehzahl n_{A} am Ausgang A des Multifunktionssystems 1.

Während der Betriebsweise Fahren, das heißt im zweiten Betriebszustand, wobei sowohl Zug- als auch Schubverkehr eingeschlossen sind, erfolgt die Leistungsübertragung in der Regel rein mechanisch über die schaltbare Kupplung 5 unter Umgehung des hydrodynamischen Bauelementes 3, das heißt die schaltbare Kupplung 5 fungiert als Schaltbare Kupplung. Diese ist geschlossen. Das in diesem Zustand an der Leistungsübertragung nicht beteiligte hydrodynamische Bauelement 3 kann dabei entweder entleert, teilbefüllt oder völlig gefüllt sein. Dies spielt insbesondere eine Rolle, wenn während des normalen Fahrvorganges, das heißt im Traktionsbetrieb oder Schubbetrieb eine Bremsung unter Ausnutzung der Strömungskräfte, das heißt durch Betätigung eines hydrodynamischen Bauelementes vorgenommen werden soll. Dazu wird vorzugsweise das hydrodynamische Bauelement 3 völlig entleert, da ansonsten ein Stoß bei Betätigung der Bremseinrichtung 13 und damit Aktivierung des hydrodynamischen Bauelementes 3 als hydrodynamischer Retarder 17 durch das sich schnell aufbauende Bremsmoment entstehen würde. Bei Vorliegen des Signales zur Erzeugung eines gewünschten Bremsmomentes wird die Bremseinrichtung 13 in Form der Sekundärradbremse geschlossen und der Arbeitsraum entsprechend dem gewünschten Moment mit Betriebsmittel befüllt. Während des Fahrvorganges ist dabei die Drehzahl des Sekundärrades n_{T} kleiner als die der Eingangsdrehzahl. Das als Turbinenrad fungierende Sekundärschaufelrad 9 läuft frei.

Beim Gangstufenwechsel, welcher eine Hochschaltung charakterisiert, wird die mechanische Kopplung zwischen dem Getriebeeingang, das heißt beispielsweise Eingang E des Multifunktionssystems 1 und dem Ausgang A unterbrochen. Das hydrodynamische Bauelement 3 ist leer, teilbefüllt oder weist Vollfüllung auf. Die Drehzahl der mit dem Eingang E gekoppelten Antriebsmaschine n₁ wird reduziert und die Drehzahl am Sekundärschaufelrad 9 ist kleiner als die am Ausgang A beziehungsweise kleiner als n₂ am Eingang nachgeordneter Schaltstufen. Das Sekundärschaufelrad 9 läuft frei. Dabei kann die Bremseinrichtung 13 geöffnet oder zum Abbremsen des Sekundärrades 9 geschlossen werden.

Bei Gangstufenwechseln, welche eine Rückschaltung in einen niederen Gang charakterisieren, ist die schaltbare Kupplung 5 geöffnet. Das hydrodynamische Bauelement 3 in Form der hydrodynamischen Kupplung 4 kann leer, teilbefüllt oder mit einer Vollfüllung versehen sein. Auch in diesem Fall ist die Drehzahl n_{T} des Sekundärschaufelrades 9 kleiner als die Drehzahl n_{A} am Ausgang des Multifunktionssystems 1. Das Sekundärschaufelrad 9 ist frei von einer Kopplung mit dem Ausgang A.

Zur Realisierung von Bremsvorgängen wird die Bremseinrichtung 13 betätigt und des weiteren die schaltbare Kupplung 5. Das hydrodynamische Bauelement 3 in Form der hydrodynamischen Kupplung 4 muß voll- oder zumindest teilbefüllt sein. Durch den Freilauf F läuft das Sekundärschaufelrad 9 mit geringerer Drehzahl n_{T} oder Drehzahl 0 als der Ausgang A des modularen Multifunktionssystems 1 um.

Bei den einzelnen Schaltvorgängen Hochschaltung oder Rückschaltung sind verschiedene Schaltstufenkombinationen möglich. Das heißt, es kann von einem ersten Ausgangsgang in entweder eine nächst höhere oder nächst niedere Gangstufe geschaltet werden oder aber unter Überspringen einer oder mehrerer Gangstufen in einen höheren oder niederen Gang.

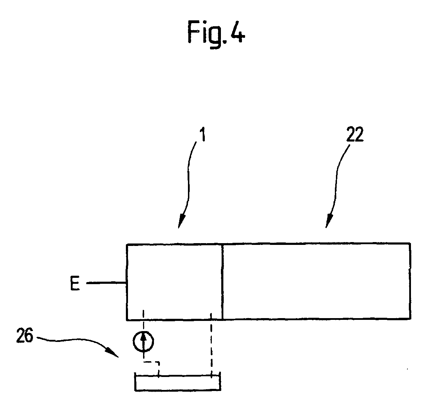

Gemäß einer besonders vorteilhaften Ausgestaltung in Figur 4 bei Zuordnung des modular aufgebauten Multifunktionssystems 1 zu einer Getriebebaueinheit 22 ist ein gemeinsamer Betriebsmittel- und/oder Schmiermittelhaushalt 26 vorgesehen. Die andere hier nicht dargestellte Möglichkeit besteht darin, dem modular aufgebauten Multifunktionssystem 1 einen eigenen Betriebs- und/oder Schmiermittelhaushalt zuzuordnen. Mit dieser Lösung wird ein vollständig autarkes Anfahr- und Bremsmodul geschaffen.

### Bezugszeichenliste

- 1: modular aufgebautes Multifunktionssystem
- 2: Anfahrelement
- 3: hydrodynamisches Bauelement
- 4: hydrodynamische Kupplung
- 5: schaltbare Kupplung
- 6: Antriebsseite
- 7: Abtriebsseite
- 8: Primärrad
- 9: Sekundärrad
- 10: trockene Reibkupplung
- 11: Kupplungseingangsseite
- 12: Kupplungsausgangsseite
- 13: Bremseinrichtung
- 14: ortsfeste Scheibe
- 15: Gehäuse
- 16: Scheibenelemente
- 17: hydrodynamischer Retarder
- 18: Gehäuse
- 19: erstes Modul
- 20: zweites Modul
- 21: Vorrichtung zur Dämpfung von Schwingungen
- 22: Betriebsmittel- und/oder Schmiermittelhaushalt
- 23: erste Schnittstelle
- 24: zweite Schnittstelle
- 25: dritte Schnittstelle
- A: Ausgang
- E: Eingang
- F: Freilauf
- n_{A}: Drehzahl am Ausgang
- n₂: Drehzahl am Eingang einer dem modularen Multifunktionssystem nachgeschalteten Schaltstufe
- n₁: Drehzahl der Antriebsmaschine
- n_{T}: Drehzahl des Sekundärrades

## Patentansprüche

1. Modular aufgebautes Multifunktionssystem (1), insbesondere kombiniertes Anfahr- Brems- und Leistungsübertragungssystem ;
1.1 mit einem Eingang (E) und einem Ausgang (A);
1.2 mit einem Anfahrelement (2) in Form eines hydrodynamischen Bauelementes (3), umfassend eine, mit dem Eingang (E) drehfest koppelbare Antriebsseite (6) und eine mit dem Ausgang (A) koppelbare Abtriebsseite (7) und mindestens ein Primärrad (8) und ein Sekundärrad (9);
1.3 mit einer schaltbaren Kupplung (5) zwischen dem Eingang (E) und dem Ausgang (A);
1.4 mit einer Bremseinrichtung (13) zur ortsfesten Abstützung und Abbremsung des Sekundärrades (9) an einem Gehäuse (15), wobei
1.5 zwischen der Abtriebsseite (7) des Anfahrelementes (2) und dem Ausgang (A) ein Freilauf (F) angeordnet ist und
1.6 die schaltbare Kupplung (5) als trockenlaufende Reibkupplung ausgeführt **dadurch gekennzeichnet** ist,
1.7 dass Anfahrelement (2), Bremseinrichtung (13) und Freilauf (F) zu einer Baueinheit (19) zusammengefaßt sind.

2. Modular aufgebautes Multifunktionssystem (1) nach Anspruch 1, **dadurch gekennzeichnet, daß** das hydrodynamische Bauelement (3) und die schaltbare Kupplung (5) parallel schaltbar sind.

3. Modular aufgebautes Multifunktionssystem (1) nach einem der Ansprüche 1 oder 2, **gekennzeichnet durch** die folgenden Merkmale:
3.1 mit einer Einrichtung zur Schwingungsdämpfung (21);
3.2 die Einrichtung zur Schwingungsdämpfung (21) ist räumlich und funktional vor der schaltbaren Kupplung (5) angeordnet.

4. Modular aufgebautes Multifunktionssystem (1) nach einem der Ansprüche 1 oder 2, **gekennzeichnet durch** die folgenden Merkmale:
4.1 mit einer Einrichtung zur Schwingungsdämpfung (21);
4.2 die Einrichtung zur Schwingungsdämpfung (21) ist funktional hinter der schaltbaren Kupplung (5) angeordnet.

5. Modular aufgebautes Multifunktionssystem (1) nach einem der Ansprüche 1 bis 4, **dadurch gekennzeichnet, daß** das hydrodynamische Bauelement (3) als hydrodynamische Kupplung (4) ausgeführt ist.

6. Modular aufgebautes Multifunktionssystem (1) nach einem der Ansprüche 1 bis 5, **dadurch gekennzeichnet, daß** das Primärrad (8) räumlich in axialer Richtung vom Eingang (E) zum Ausgang (A) zwischen der schaltbaren Kupplung (5) und dem Sekundärrad (9) angeordnet ist.

7. Modular aufgebautes Multifunktionssystem (1) nach einem der Ansprüche 1 bis 6, **dadurch gekennzeichnet, daß** das Sekundärrad (9) räumlich in axialer Richtung vom Eingang (E) zum Ausgang (A) betrachtet zwischen der schaltbaren Kupplung (5) und dem Primärrad (8) angeordnet ist.

8. Modular aufgebautes Multifunktionssystem (1) nach einem der Ansprüche 1 bis 7, **dadurch gekennzeichnet, daß** ein Element der Bremseinrichtung (13) zum Abbremsen mit der Abtriebsseite (7) des hydrodynamischen Bauelementes (3) vor dem Freilauf (F) angelenkt ist.

9. Modular aufgebautes Multifunktionssystem (1) nach Anspruch 8, **dadurch gekennzeichnet, daß** die Bremseinrichtung (13) als Reibbremseinrichtung, umfassend mindestens ein an einem Gehäuse (15, 18) ortsfest angeordnetes reibflächentragendes Element und ein zweites mit der Abtriebsseite (7) des hydrodynamischen Bauelementes (3) drehfest gekoppeltes reibflächentragendes Element, ausgeführt ist.

10. Modular aufgebautes Multifunktionssystem (1) nach Anspruch 9, **dadurch gekennzeichnet, daß** die Bremseinrichtung als trocken laufende Reibbremse ausgeführt ist.

11. Modular aufgebautes Multifunktionssystem (1) nach einem der Ansprüche 1 bis 10, **gekennzeichnet durch** die folgenden Merkmale:
11.1 die Baueinheit aus Anfahrelement (2), der Freilauf (F) und die Bremseinrichtung (13) bilden einen ersten Modul (19);
11.2 die schaltbare Kupplung (5) bildet ein zweites Modul.

12. Modular aufgebautes Multifunktionssystem (1) nach Anspruch 11, **dadurch gekennzeichnet, daß** jedem der Module (19, 20) ein eigener Gehäuseteil (15) zugeordnet ist, welche Gehäuseteile miteinander lösbar verbunden sind.

13. Modular aufgebautes Multifunktionssystem (1) nach einem der Ansprüche 11 oder 12, **dadurch gekennzeichnet, daß** der Gehäuseteil (15) des ersten Modules (19) beim Einsatz in einer Getriebebaueinheit vom Gehäuse der Getriebebaueinheit gebildet wird.

14. Modular aufgebautes Multifunktionssystem (1) nach einem der Ansprüche 11 bis 13, **dadurch gekennzeichnet, daß** der erste Modul (19) ein eigenständiges Betriebs- und/oder Steuer- und/oder Schmiermittelversorgungssystem aufweist.

15. Getriebebaueinheit mit einem modular aufgebauten Multifunktionssystem (1) gemäß einem der Ansprüche 1 bis 14 und drehfest mit dem Ausgang (A) koppelbaren Nachschaltstufen oder stufenlosen Getriebeteilen.

16. Getriebebaueinheit nach Anspruch 15, **dadurch gekennzeichnet, daß** diese als Automatgetriebe ausgeführt ist.

17. Getriebebaueinheit nach Anspruch 15, **dadurch gekennzeichnet, daß** diese als automatisiertes Schaltgetriebe ausgeführt ist.

## Claims

1. A modularly structured multi-functional system (1), especially a combined starting, braking and power transmission system;
1.1 with an input (E) and an output (A);
1.2 with a starting element (2) in the form of a hydrodynamic component (3), comprising a drive side (6) which can be coupled in a torsionally rigid manner with the input (E) and a driven side (7) which can be coupled with the output (A) and at least one primary wheel (8) and a secondary wheel (9);
1.3 with a switchable clutch (5) between the input (E) and the output (A);
1.4 with a braking device (13) for stationary support and braking of the secondary wheel (9) on a housing (15), with
1.5 a freewheel (F) being arranged between the driven side (7) of the starting element (2) and the output (A), and
1.6 with the switchable clutch (5) being configured as a dry-running friction clutch, **characterized in that**
1.7 the starting element (2), braking device (13) and freewheel (F) are combined into a modular unit (19).

2. A modularly structured multi-functional system (1) as claimed in claim 1, **characterized in that** the hydrodynamic component (3) and the switchable clutch (5) can be switched in parallel.

3. A modularly structured multi-functional system (1) as claimed in one of the claims 1 or 2, **characterized by** the following features:
3.1 with a device for vibration damping (21);
3.2 the device for vibration damping (21) is arranged in a spatial and functional respect before the switchable clutch (5).

4. A modularly structured multi-functional system (1) as claimed in one of the claims 1 or 2, **characterized by** the following features:
4.1 with a device for vibration damping (21);
4.2 the device for vibration damping (21) is arranged in a functional respect behind the switchable clutch (5).

5. A modularly structured multi-functional system (1) as claimed in one of the claims 1 to 4, **characterized in that** the hydrodynamic component (3) is arranged as a hydrodynamic clutch (4).

6. A modularly structured multi-functional system (1) as claimed in one of the claims 1 to 5, **characterized in that** the primary wheel (8) is arranged in a spatial respect in the axial direction from the input (E) to the output (A) between the switchable clutch (5) and the secondary wheel (9).

7. A modularly structured multi-functional system (1) as claimed in one of the claims 1 to 6, **characterized in that** the secondary wheel (9) is arranged in a spatial respect in the axial direction as seen from the input (E) to the output (A) between the switchable clutch (5) and the primary wheel (8).

8. A modularly structured multi-functional system (1) as claimed in one of the claims 1 to 7, **characterized in that** one element of the braking device (13) for braking is linked with the driven side (7) of the hydrodynamic component (3) before the freewheel (F).

9. A modularly structured multi-functional system (1) as claimed in claim 8, **characterized in that** the braking device (13) is configured as a friction braking device, comprising at least one element which carries a friction surface and is arranged in a stationary way on a housing (15, 18) and a second element which carries a friction surface and is coupled in a torsionally rigid manner with the driven side (7) of the hydrodynamic component (3).

10. A modularly structured multi-functional system (1) as claimed in claim 9, **characterized in that** the braking device is arranged as dry-running friction brake.

11. A modularly structured multi-functional system (1) as claimed in one of the claims 1 to 10, **characterized by** the following features:
11.1 the module made of starting element (2), freewheel (F) and braking device (13) form a first module (19);
11.2 the switchable clutch (5) forms a second module.

12. A modularly structured multi-functional system (1) as claimed in claim 11, **characterized in that** a separate housing part (15) is associated with each of the modules (19, 20), which housing parts are detachably connected with each other.

13. A modularly structured multi-functional system (1) as claimed in one of the claims 11 or 12, **characterized in that** the housing part (15) of the first module (19) is formed by the housing of the transmission module when used in a transmission module.

14. A modularly structured multi-functional system (1) as claimed in one of the claims 11 to 13, **characterized in that** the first module (19) comprises a separate operating and/or control and/or lubricant supply system.

15. A transmission module with a modularly structured multi-functional system (1) as claimed in one of the claims 1 to 14 and with secondary change-speed gear stages or infinitely variable change-speed gear parts which can be coupled in a torsionally rigid manner with the output.

16. A transmission module as claimed in claim 15, **characterized in that** the same is configured as an automatic transmission.

17. A transmission module as claimed in claim 15, **characterized in that** the same is configured as an automated shift transmission.

## Revendications

1. Système multifonctions (1) de construction modulaire, notamment système combiné de démarrage, de freinage et de transmission de la puissance,
1.1 avec une entrée (E) et une sortie (A),
1.2 avec un élément de démarrage (2) prenant la forme d'un élément constitutif hydrodynamique (3) comprenant un côté menant (6) pouvant être couplé de manière solidaire en rotation à l'entrée (E) et un côté mené (7) pouvant être couplé à la sortie (A) et au moins une roue primaire (8) et une roue secondaire (9),
1.3 avec un accouplement embrayable (5) entre l'entrée (E) et la sortie (A),
1.4 avec un dispositif de freinage (13) pour l'appui stationnaire et le freinage de la roue secondaire (9) dans un carter (15), dans lequel
1.5 il est prévu une roue libre (F) entre le côté mené (7) de l'élément de démarrage (2) et la sortie (A), et
1.6 l'accouplement embrayable (5) est réalisé comme un accouplement à friction fonctionnant à sec,
1.7 **caractérisé en ce que** l'élément de démarrage (2), le dispositif de freinage (13) et la roue libre (F) sont réunis dans une même unité constructive (19).

2. Système multifonctions (1) de construction modulaire selon la revendication 1, **caractérisé en ce que** l'élément constitutif hydrodynamique (3) et l'accouplement embrayable (5) peuvent être embrayés en parallèle.

3. Système multifonctions (1) de construction modulaire selon l'une quelconque des revendications 1 ou 2, **caractérisé en ce qu'**il comporte les caractéristiques suivantes :
3.1 un dispositif pour l'amortissement des vibrations (21) ;
3.2 le dispositif pour l'amortissement des vibrations (21) est disposé avant l'accouplement embrayable (5) dans l'espace et du point de vue fonctionnei.

4. Système multifonctions (1) de construction modulaire selon l'une quelconque des revendications 1 ou 2, **caractérisé en ce qu'**il comporte les caractéristiques suivantes :
4.1 un dispositif pour l'amortissement des vibrations (21) ;
4.2 le dispositif pour l'amortissement des vibrations (21) est disposé après l'accouplement embrayable (5) dans l'espace et du point de vue fonctionnel.

5. Système multifonctions (1) de construction modulaire selon l'une quelconque des revendications 1 à 4, **caractérisé en ce que** l'élément constitutif hydrodynamique (3) est conformé comme un accouplement hydrodynamique (4).

6. Système multifonctions (1) de construction modulaire selon l'une quelconque des revendications 1 à 5, **caractérisé en ce que** la roue primaire (8) est disposée dans l'espace, dans le sens axial de l'entrée (E) à la sortie (A), entre l'accouplement embrayable (5) et la roue secondaire (9).

7. Système multifonctions (1) de construction modulaire selon l'une quelconque des revendications 1 à 6, **caractérisé en ce que** la roue secondaire (9) est disposée dans l'espace, dans le sens axial de l'entrée (E) à la sortie (A), entre l'accouplement embrayable (5) et la roue primaire (8).

8. Système multifonctions (1) de construction modulaire selon l'une quelconque des revendications 1 à 7, **caractérisé en ce qu'**un élément du dispositif de freinage (13) servant au freinage est articulé avec le côté mené (7) de l'élément constructif hydrodynamique (3) avant la roue libre (F).

9. Système multifonctions (1) de construction modulaire selon la revendication 8, **caractérisé en ce que** le dispositif de freinage (13) est conformé comme un dispositif de freinage à friction, comprenant au moins un élément portant une surface de frottement disposé de manière stationnaire dans un carter (15, 18) et un deuxième élément portant une surface de frottement couplé de manière solidaire en rotation avec le côté mené (7) de l'élément constitutif hydrodynamique (3).

10. Système multifonctions (1) de construction modulaire selon la revendication 9, **caractérisé en ce que** le dispositif de freinage est conformé comme un frein à friction fonctionnant à sec.

11. Système multifonctions (1) de construction modulaire selon l'une quelconque des revendications 1 à 10, **caractérisé en ce qu'**il comporte les éléments suivants :
11.1 l'unité constructive formée par l'élément de démarrage (2), la roue libre (F) et le dispositif de freinage (13) forment un premier module (19) ;
11.2 l'accouplement embrayable (5) forme un second module.

12. Système multifonctions (1) de construction modulaire selon la revendication 11, **caractérisé en ce que** chacun des modules (19, 20) est associé à sa propre partie de carter (15), lesquelles parties de carter peuvent être assemblées ensemble de manière amovible.

13. Système multifonctions (1) de construction modulaire selon l'une quelconque des revendications 11 ou 12, **caractérisé en ce que** la partie de carter (15) du premier module (19) est formée, dans le cas d'utilisation dans une unité constructive d'engrenages, par le carter de l'unité constructive d'engrenages.

14. Système multifonctions (1) de construction modulaire selon l'une quelconque des revendications 11 à 13, **caractérisé en ce que** le premier module (19) possède un système autonome d'exploitation et/ou de commande et/ou d'alimentation en lubrifiant.

15. Unité constructive d'engrenages comprenant un système multifonctions (1) de construction modulaire selon l'une quelconque des revendications 1 à 14 et des étages de rapports ou des parties d'engrenage sans étages pouvant être couplés avec la sortie (A).

16. Unité constructive d'engrenages selon la revendication 15, **caractérisée en ce qu'**elle est réalisée comme une boîte de vitesses automatique.

17. Unité constructive d'engrenages selon la revendication 15, **caractérisée en ce qu'**elle est réalisée comme une boîte de vitesses automatisée.
